# NEW EUROPEAN PATENT SPECIFICATION

(11) **EP 0 685 154 B2**
(45) Date of publication and mention of the opposition decision: **06.12.2000**
(45) Mention of the grant of the patent: 26.11.1997
(21) Application number: 95201232.6
(22) Date of filing: 11.05.1995
(51) Int. Cl.: A01J 27/00

(54) **Machine for marking hard-rind matured cheese, such as parmesan**
Vorrichtung zum Markieren von Reifen Käsen mit harter Rinde sowie Parmesan
Machine pour marquer des fromages affines à croûte dure comme le parmesan

(30) Priority: 01.06.1994 IT RE940030 U
(43) Date of publication of application: 06.12.1995
(73) Proprietor: CONSORZIO DEL FORMAGGIO PARMIGIANO REGGIANO, I-42100 Reggio Emilia (IT)
(72) Inventor: Luigi, Verrini, I-41012 Carpi, (Modena) (IT)
(74) Representative: Corradini, Corrado

(56) References cited:
- EP-A- 0 421 837
- DD-A- 148 610
- DE-A- 3 939 866
- DE-C- 3 836 821
- FR-A- 2 621 529
- US-A- 4 564 737

## Description

The surface of whole cheeses produced by cooperatives is required under their regulations to carry a recognition mark, which is generally the mark of the particular cooperative concerned.

Whole cheeses are currently marked by two different methods.

One of these consists of marking the whole cheese while still fresh, this being done by providing the mould containing the fresh cheese mass with suitable inscriptions in relief. The other consists of applying an incandescent marker which melts the rind and can be applied to a hard-rind cheese at an advanced stage of its maturing.

Both these marking methods suffer from drawbacks.

Fresh marking can be applied only to fresh whole cheeses as stated, and hence certifies only the origin of the product, and not its quality.

In this respect, as quality defects can come to light during maturing, this type of difficultly erasable permanent marking can also mark products not of highest quality, or even defective.

Hot marking can only be applied to limited regions of the whole cheese surface, and is hence unsuitable for marking those portions of a whole cheese having their surface distant from the markings. This has proved inadequate, in particular in the light of the recent tendency to sell small vacuum-packed portions of a whole cheese

EP-A-421837 discloses a machine for marking a whole hard cheese comprising a rotary plate for supporting a whole cheese to be marked, means for rotating the rotary plate and a laser systempositioned to the side of the rotary plate.

The laser system emits a laser beam toward the surface of the whole cheese, a mask reproducing the design to be imprinted on the cheese surface being provided between the laser torch and the said surface.

The above mentioned machine is not suitable for marking the whole cheese according to a design covering the entire surface thereof, comprising curved surfaces.

A requirement has therefore existed for some time, especially in the field of Parmesan cheese cooperatives, for applying a mark to the whole cheese when in an advanced state of maturing, the mark being restricted only to those whole cheeses which have passed strict quality control and being applied to the entire surface of the whole cheese or at least to its cylindrical-convex surface.

Obviously said mark must be able to be used to obliterate an existing mark.

Said machine must also be of small dimensions so that it can be easily transported from one maturing store to another and be installed, and further be easily moved from one region to another of the same store.

The object of the present patent is to provide a machine satisfying the aforesaid requirements.

This object is attained according to the invention by a machine which acts on the surface or rind of the whole cheese by means of a laser beam guided in synchronism with the rotation of the whole cheese.

The application of laser technology to the scoring of a relatively soft low-melting surface such as the rind of a natured hard cheese has required not only the overcoming of certain radical prejudices according to which it has been previously considered impossible to score surfaces of low-melting soft material with a laser beam in a controlled manner, but also to solve subordinate problems by devising expedients which overall cooperate in achieving the result, as will be apparent hereinafter.

The machine according to the invention comprises means for receiving the whole cheese to be marked, means for perfectly centering the whole cheese, means for rotating it in front of a laser beam, and means for guiding the beam along perpendicular axes in accordance with a graphic program executed by a computer.

The operational and constructional characteristics and merits of the invention will be more apparent from the detailed description of a preferred embodiment thereof given hereinafter by way of non-limiting example with reference to the accompanying drawings.

Figure 1 is a side view of the invention in its operating position.

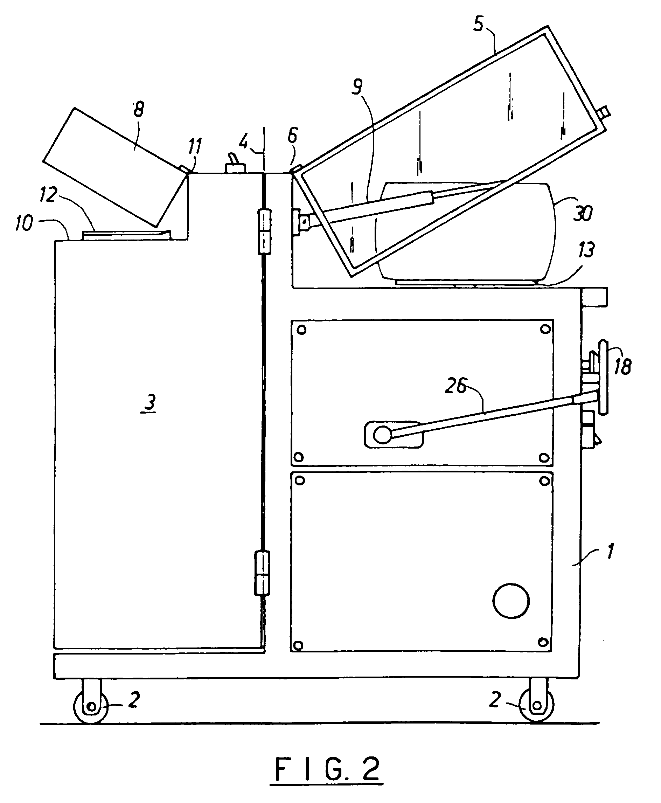

Figure 2 is a view of the invention from the opposite side in its rest position with its upper covers raised.

Figure 3 is a plan view of the invention.

Figure 4 is a plan view of the invention without the whole cheese support plate and the underlying protection plate.

Figure 5 is a partial section on the line V-V of Figure 3.

The figures show a frame structure 1 mounted on wheels 2 and having its rear region closed by a cover 3 hinged on the vertical axis 4, and its front region closed upperly by a cover 5 hinged on the horizontal axis 6. The cover 5 is counterbalanced by a pneumatic spring 9. The structure is masked on its sides by panels 7.

The cover 3 has an upper shelf 10 enclosed within a small cover 8 hinged horizontally at 11, and on which a control keyboard rests.

The front part of the machine comprises the means for retaining, centering and moving the whole cheese.

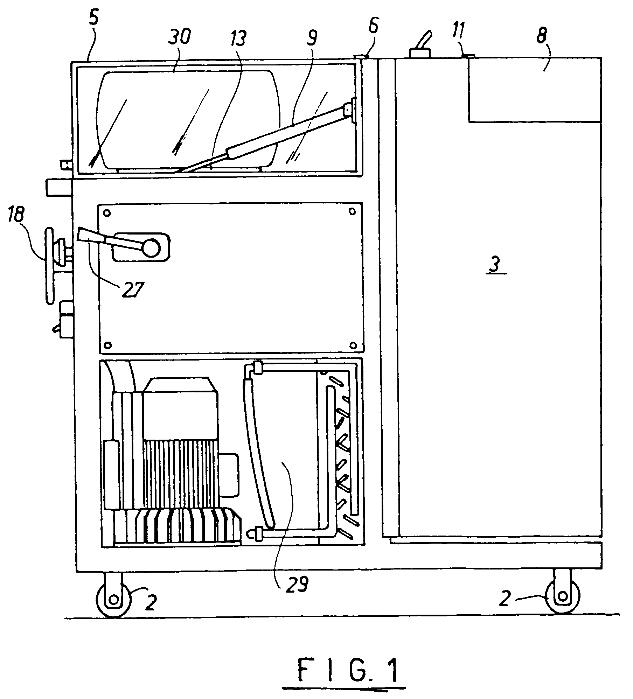

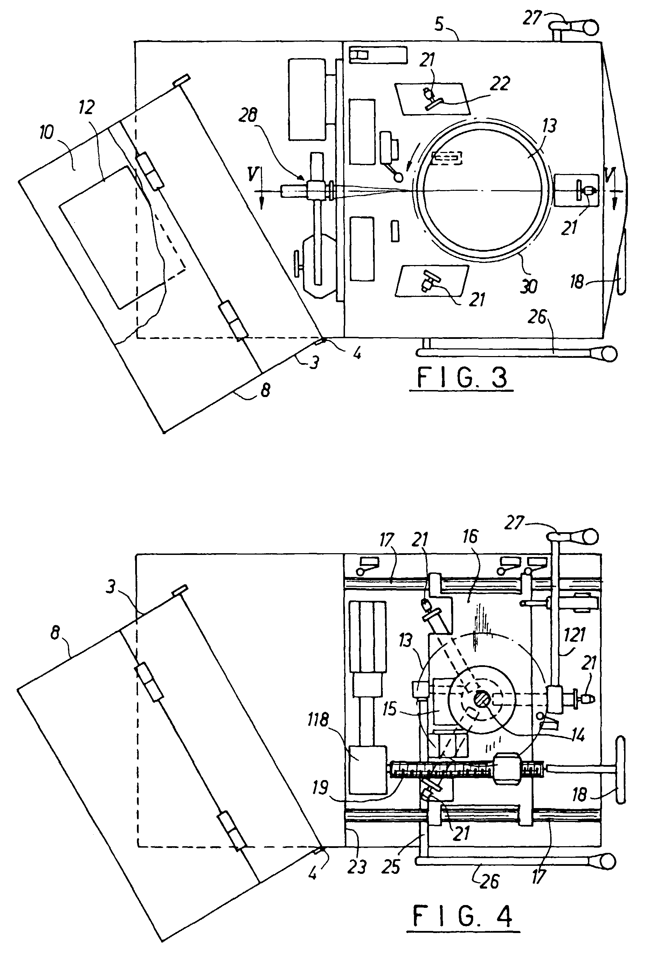

As can be seen in Figures 3, 4 and 5 these consist of a circular plate 13 supported horizontally by the vertical output shaft 14 of an electric geared motor unit 15. This latter is located on a slide 16 slidable along two cylindrical rods 17 under the control of a geared motor unit 118 (see Figure 1) which operates a threaded rod engaged in a seat in the slide 16. The said rod can be operated manually by the handwheel 18.

The slide 16 carries three pins 20 positioned 60° apart in accordance with the sides of an equilateral triangle on which there rock three levers 21 carrying at their top three pads 22 for centering the whole cheese resting on the plate 13.

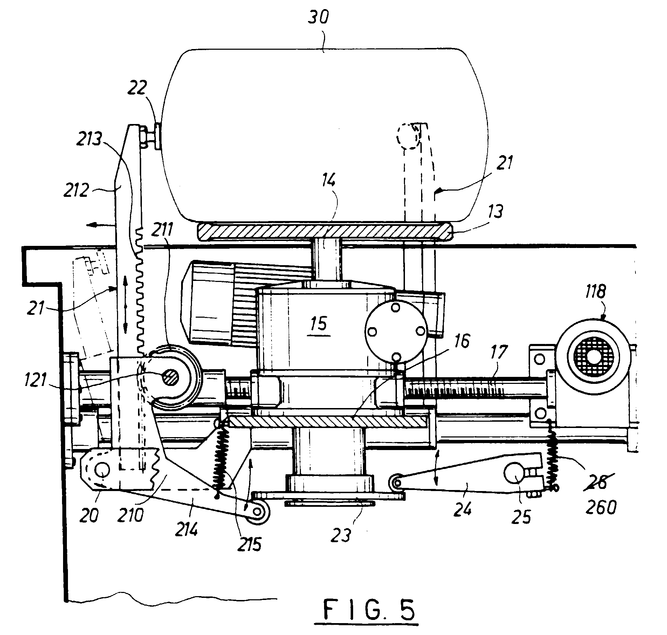

Two levers 21 close to the rear wall 23 of the compartment containing the plate 13 (see Figure 4) are composed of only one piece, whereas the third lever 21, which rises centrally in front of the operator, is composed of two parts (see Figure 5).

The lower part 210 is hinged to the pin 20 and comprises an appendix 214 which extends virtually radially below a disc 23 coaxial to the plate 13, which can move vertically. The lower part 214 is maintained against the disc 23 by the spring 215.

The disc 23 is urged elastically upwards, and is pushed downwards by an appendix 24 keyed onto the shaft 25 and maintained in contact with the disc 23 by a spring 260.

The shaft 25 extends to the outside of the structure 1 where it carries an operating lever 26 (see Figure 4).

The lower part 210 also carries a pinion 211 the shaft 121 of which extends to the outside of the structure, where it carries the operating lever 27 (see Figure 4).

The upper part 212 carrying the pad 22 slides within the lower part 210.

The part 212 comprises a rack 213 which engages the pinion 211.

Operating the lever 27 causes the pinion 211 to lower or raise the part 212, which can hence free the space in front of the plate 13.

The other two levers 21 both have an appendix similar to 214 extending below the disc 23, which simultaneously operates all three levers.

The laser device schematically indicated by 28 is located in the rear region of the frame 1 (Figure 3).

This is a Synrad model 57-1-28 sealed CO₂ laser well known to the expert of the art. It emits infrared radiation within the non-visible range at a wavelength of 10.6 µm with a max mean power of 100 W and has the following specification:
- wavelength: 10µm (nominal 10.6 µm)
- max mean power: 100 W (typical 120 W, minimum 90 W)
- power stability: ± 5%
- useful repetition frequency: 4 KHz
- polarization: vertical
- beam diameter: 4 mm
- beam divergence: 3.5 mR
- electrical power employed: 2.5 KVA
- electrical supply: 65A
- laser head dimensions: 958 x 114 x 160 mm
- approximate laser head weight: 15 kg.

It comprises a water/air heat exchanger, indicated schematically by 29 (Figure 1), with a capacity of about 10 litres of water.

There are also provided a feed carriage and a galvanometric beam deflection system controlled by a miniprocessor such as a personal computer which, by virtue of the graphic program, enables the design to be reproduced on the moving whole cheese to be marked.

In this specific case the system bus of the personal computer comprises two 12 bit D/A (digital/analog) converters (hence with resolution of 1 in 4096) to generate two voltages between -5V and +5V controlling the position of the X and Y axes of the laser beam.

Said voltages of +5V and -5V correspond to the ends of the useful marking area both for the X axis and for the Y axis.

The marking area on the cylindrical-convex surface of the whole cheese 30 can be set by the handwheel 18 or motor unit 118.

To make the laser beam follow a certain path (and hence reproduce a certain design), the program has to generate moment by moment suitably synchronized and timed voltages appropriate for positioning the beam at the desired X and Y coordinates.

In the case described herein a model 5D 1203 12 bit D/A converter was used of a type suitable for insertion into one of the 8 or 16 bit slots provided in the personal computer bus.

The aforedescribed laser system is currently produced by SYNRAD INC., 91816 North Creek Pkwy N No. 103, Bothwell, Wa 98011 - 8205 USA, and is well known to the expert of the art so that a detailed description thereof will not be given.

The invention operates as follows: having arranged the whole cheese 30 to be marked on the plate 13, the lever 27 is firstly operated to raise the upper part 212 of the front lever 21, and then the lever 26 to operate the three levers 21 which perfectly centre the whole cheese on the plate 13 by means of the pads 22.

Having done this the cover 5 is lowered and the motor 118, by operating the threaded rod 19, moves the slide into the position in which the whole cheese 30 is at the correct distance from the laser generator. The computer-controlled system is then operated to rotate the plate 13 and simultaneously oscillate the laser beam and generate distinctive designs distributed peripherally over the entire development of the cylindrical-convex part of the whole cheese 30.

The safety devices, operation enabling devices and cycle control devices are not described as these can be easily implemented in various ways by an expert of the art on the basis of the aforegoing information.

## Claims

1. A machine for marking an at least partly matured whole hard cheese , comprising a rotary plate (13) of vertical axis for receiving and supporting a whole cheese (30) to be marked, means (15) for rotating the rotary plate and a laser system (28) positioned to the side of the rotary plate in a manner orientated substantially towards the plate axis, characterised by comprising means (21, 22, 23) for centering the whole cheese on the rotary plate, galvanometric deflector means for guiding the laser beam along perpendicular axes and a microprocessor provided with a graphic program which controls the said rotary means (15) and the said deflector means for the laser beam in order to cause a desired design to be executed over the entire cylindrical-convex surface of the whole cheese.

2. A machine as claimed in claim 1, characterised in that the rotary plate (13) and the relative means for rotating it and for centering the whole cheese are positioned on a slide (16) slidable on guides (17) and of which the distance from the laser beam source (29) is adjustable by means of a screw device (18, 19).

3. A machine as claimed in claim 1, characterised in that the means for centering the whole cheese comprise a plate (23) coaxial with the shaft (14) and a geared motor (15) which rotates the vertically movable whole cheese (30), the vertical movements of which are generated by a lever (26) and cause three centering levers (21) to rotate in planes arranged 120° apart and converging at the axis of the shaft (14).

4. A machine as claimed in claim 3, characterised in that at least one of the levers (21) is composed of two parts (210, 212) slidable one relative to the other and mutually engaged by rack (213) and pinion (211) means operable from the outside by a lever (27), such that the upper end of the part (212) can rise above the the plate (13) or descend approximately to the level thereof.

5. A machine as claimed in claim 1, characterised in that the laser system (28) is a sealed CO₂ system, which emits an infrared beam in the non-visible range at a wavelength close to 10 µm with a mean power of 100 ± 0.05 W, and comprises a galvanometric system for deflection along two perpendicular axes controlled by a computer by means of a graphic program.

## Patentansprüche

1. Eine Maschine zum Markieren einer ganzen, zumindest zum Teil gelagerten Hartkäseform, einschließlich Drehplatte (13) mit vertikaler Achse zur Aufnahme und zur Stütze einer ganzen, zu markierenden Käseform (30) , Drehvorrichtungen (15) zum Drehen der Drehplatte und ein Lasersystem (28), das auf der Seite der Drehplatte angeordnet ist, derart, daß es im wesentlichen zur Achse der Platte gerichtet ist, welche Vorrichtungen (21,22,23) zum Zentrieren der ganzen Käseform auf der Drehplatte umfaßt, galvanometrische Ablenkvorrichtungen zum Führen den Laserstrahl senkrechten Achsen entlang und ein mit einem Graphikprogramm ausgestatteter Mikroprozessor, der die oben genannten Dreh- (15) bzw. Ablenkvorrichtungen für den Laserstrahl kontrolliert, um die Ausführung der gewünschten Zeichnung über die gesamte zylindrisch-konvexe Oberfläche der Käseform zu bewirken.

2. Eine Maschine laut Patentanspruch 1, die sich dadurch auszeichnet, daß die Drehplatte (13) und die entsprechenden Vorrichtungen für ihre Drehung und für das Zentrieren der ganzen Käseform auf einer auf Führungen (17) gleitbaren Gleifläche positioniert sind, deren Distanz von der Laserstrahlquelle (29) mit Hilfe einer Schraubvorrichtung (18,19) regulierbar ist.

3. Eine Maschine laut Patentanspruch 1, die sich dadurch auszeichnet, daß die Vorrichtungen für das Zentrieren der ganzen Käseform eine mit dem Schaft (14) koaxiale Platte (23) und einen Getriebemotor (15) umfassen, der die vertikal bewegliche Käseform (30) dreht, dessen vertikale Bewegungen durch einen Hebel (26) hervorgerufen werden und die drei Zentrierhebel (21) in Ebenen drehen lassen, die in einem Abstand von 120° zueinander angeordnet sind, welche in der Achse des Schafts (14) zusammenlaufen.

4. Eine Maschine laut Patentanspruch 3, die sich dadurch auszeichnet, daß sich zumindest einer der Hebel (21) aus zwei, in Relation zueinander verschiebbaren Teilen (210, 212) zusammensetzt, die gegenseitig durch Zahnstangenvorrichtungen (213, 211) verbunden sind, welche von außen durch einen Hebel (27) betrieben werden, so daß das obere Ende des Teiles (212) sich über die Platte (13) erheben oder ungefähr auf der Höhe davon absinken kann.

5. Eine Maschine laut Patentanspruch 1, die sich dadurch auszeichnet, daß das Lasersystem (28) ein versiegeltes CO₂ System darstellt, welches einen infraroten Strahl im nicht sichtbaren Bereich bei einer Wellenlänge von nahe 10 µm mit einer Stärke von 100 ± 0.05 W ausstrahlt, und ein galvanometrisches System für die Ablenkung entlang zweier senkrechter Achsen umfaßt, die von einem Computer mittels Graphikprogramm kontrolliert werden.

## Revendications

1. Une machine pour marquer une entière forme de fromage fermenté à pâte dure et au moins partiellement desséché, qui comprend une plaque tournante (13) avec un axe vertical pour recevoir et supporter une forme de fromage entière (30) qui doit être marquée, des dispositifs (15) pour tourner la plaque tournante et un système à laser (28) situé à côté de la plaque tournante, de façon à être dirigé essentiellement vers l'axe de la plaque comprenant des dispositifs (21,22,23) pour centrer l'entière forme de fromage sur la plaque tournante, des dispositifs galvanométriques défléchissants pour diriger le rayon laser le long des axes perpendiculaires et un microprocesseur pourvu d'un programme graphique contrôlant les susdit dispositifs de rotation (15) et les dispositifs déflecteurs pour le rayon laser pour permettre l'exécution du dessin désiré sur l'entière surface cylindrique-convexe de la forme du fromage.

2. Une machine selon la revendication 1 caractérisée par la susdite plaque tournante (13) et les dispositifs correspondants pour la faire tourner et pour centrer le fromage, qui sont positionnés sur un plan de glissage (16) glissant sur des guidages (17) et dont la distance par rapport à la source du rayon laser peut être réglée par un dispositif à vis (18, 19).

3. Une machine selon la revendication 1 caractérisée par des dispositifs pour centrer le fromage entier qui comprennent une plaque (23) coaxiale avec une tige (14) et un moteur à engrenages (15) qui tourne le fromage entier (30), fromage qui par ailleurs est mobile selon l'axe vertical, les mouvements verticals duquel sont produits par un levier (26) et font tourner trois leviers centrant (21) dans des plans situés à une distance de 120° l'un de l'autre qui convergent dans l'axe de la tige (14).

4. Une machine selon la revendication 3 caractérisée par le fait qu'au moins un des leviers (21) susdits est composé de deux éléments (210, 212) dont l'un coulisse par rapport à l'autre et qui sont mutuellement engagés par des dispositifs à crémaillère (213, 211) actionnés de l'extérieur par un levier (27) de manière que le bout supérieur de l'élément (212) puisse se soulever au-dessus de la plaque (13) ou descrendre approximativement à ce niveau.

5. Une machine selon la revendication 1 caractérisée par un système à laser (28) qui est un système à CO₂ qui émet un rayon infrarouge dans la sphère non-visible avec une longueur d'onde près de 10 µm et une force moyenne de 100 ± 0.05 W, et qui comprend un système galvanométrique pour la déflexion le long de deux axes perpéndiculaires contrôlé par un programme graphique informatisé.
